(19) **Europäisches Patentamt**
**European Patent Office**
**Office européen des brevets**

(11) **EP 4 250 249 A1**

(12) **EUROPEAN PATENT APPLICATION**

(43) Date of publication:
**27.09.2023 Bulletin 2023/39**

(21) Application number: **23163420.5**

(22) Date of filing: **22.03.2023**

(51) International Patent Classification (IPC):
**G06V 10/82** *(2022.01)* **G06V 40/16** *(2022.01)*

(52) Cooperative Patent Classification (CPC):
**G06V 10/82; G06V 40/172**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.03.2022 EP 22164466**

(71) Applicant: **Facedapter Sàrl**
**1290 Versoix (CH)**

(72) Inventors:
- **George, Anjith**
**1920 Martigny (CH)**
- **Marcel, Sébastien**
**1920 Martigny (CH)**

(74) Representative: **Liebetanz, Michael**
**Isler & Pedrazzini AG**
**Giesshübelstrasse 45**
**Postfach 1772**
**8027 Zürich (CH)**

(54) **HETEROGENOUS FACE RECOGNITION SYSTEM AND METHOD**

(57) A heterogeneous face recognition system comprises a pre-trained face recognition network (200) having an input channel (210) configured to input a captured image (10 or 20) comprising at least one face in a target modality (20) into the pre-trained face recognition network (200). A prepended domain transformer block (100) is prepended to the pre-trained face recognition network (200) configured to provide a prepended input channel for the captured image (10 or 20) in the target modality, wherein the prepended domain transformer block (100) is configured to transform the captured image from the target modality into a transformed-target modality image to be used as an input image for the pre-trained face recognition network (200).

FIG. 2

**Description**

TECHNICAL FIELD

The present invention relates to a heterogeneous face recognition system and method as well as a training method for the system.

PRIOR ART

Heterogeneous Face Recognition (HFR) refers to matching face images captured in different domains, such as thermal to visible images (VIS), sketches to visible images, near-infrared to visible, and so on. This is particularly useful in matching visible spectrum images to other modalities captured from other modalities. Though highly useful, HFR is challenging because of the domain gap between the source and target domain. Often, large-scale paired heterogeneous face image datasets are absent, preventing training models specifically for the heterogeneous task.

The article from DE FREITAS PEREIRA TIAGO et al. "Heterogenous Face Recognition Using Domain Specific Units" in IEEE Transactions on Information Forensics and Security, IEEE, USA, vol. 14, no. 7, pages 1803 to 1816, XP011715430, ISSN:1556-6013 and DOI:10.1109/TIFS.2018.2885284 discloses a heterogeneous face recognition system using at the first stage of the domain independent feature detector FR system a DSU approach to improve the recognition rate. In other words, the first level or entry unit of the heterogeneous face recognition system is replaced as shown in Fig. 3 of said document by three or more Domain Specific Units handling input images of different domains, e.g. visual, thermal and sketch to name a few . In other words, the existing pretrained heterogeneous face recognition is disturbed and broken up to replace a first level by said DSUs. Thus the efficiency of the heterogeneous face recognition module is reduced. In other words, DE FREITAS proposes to readapt the lower layers of the pre-trained FR model in what are called Domain specific units. In other words, DSU approach takes the FR model and changes the inner lower layers of the FR model. This means that DE FREITAS has to tweak if for different FR architectures. This creates a bottleneck that limits the possibility of learning.

The article "Beyond the Visible: A Survey on Cross-spectral Face Recognition", ARXIV.ORG, Cornell Unitversity Library, 201 OLIN LIBRARY CORNELL UNIVERSITY ITHACA, NY 14854, 12.01.2022, XP091138229 from DAVID ANGHELONE provides an overview of known cross-modal image synthesis approaches, where an input image is transformed from a target modality before being input into a pretrained face reconition network.

The article "Coupled generative adversial network for heterogenous face recognition" in Image and Vision Computing, Elsevier, Guildford, GB, vol. 94, 10.12.2019, XP086062818, ISSN:0262-8856, DOI: 10.1016/J.MAVIS.2019.103861 from IRANMANESH SEYED MEHID et al. is related to the use of two coupled GAN based sub-networks with different input channels for different input modalities.

The article "Disentangled Spectrum Variations Networks for NIR-VIS Face Recognition" by HU WEIPENG et al, in IEEE Transactions on Multimedia, IEEE, USA, vol. 22, no. 5, 30-08-2019, pages 1234 to 1248, XP 011784969 proposes - as the title suggests - a so called Disentangled Spectrum Variations Networks (DSVN) consisting of a SSOD (step-wise Spectrum Orthogonal Decomposition) and a SaDFL (Spectrum adversarial Discriminative Feature Learning) which receive all input images directly.

The same lead author has published with his group the article "Adversarial Disentangled Spectrum Variations and Cross-Modality Attention Networks for NIR-VIS Face Recognition" in the same journal in vol. 23, pages 145-160, 16.03.2020, XP011826635, ISSN: 1520-210, DOI: 10.1109/TMM.2020.2980201 wherein he suggests an update of the DSVN with a now-called ADCAN architecture to reduce the gap between the two domains at stake, i.e. NIR and VIS wheein a Cross-modality Attention Block (CMAB for short) is introduced as well.

SUMMARY OF THE INVENTION

Based on this prior art, it is an object of the present invention to provide a HFR method and system for matching face images across different sensing modalities while using an pretrained heterogenous face recognition system. In this respect the pretrained heterogenous face recognition system can be any stand alone pretrained heterogenous face recognition system This object is achieved with a method having the features of claim 1 and the system having the features of claim 7.

Such a heterogeneous face recognition system comprises a pre-trained face recognition network and a prepended domain transformer block. An image comprising at least one face in a target modality is captured or provided, wherein subsequently a face is detected in the image and face recognition in the pre-trained face recognition network is applied on said image with the proviso that the prepended domain transformer block is prepended to the pre-trained face recognition network and is configured to transform the image from the target modality into a transformed-target modality image to be used as an input for the pre-trained face recognition network.

The core idea of the approach according to the invention is to add a neural network block in front of a pre-trained face recognition (FR) network to address the domain gap. Retraining this new block with few paired samples in a contrastive learning setup is enough to achieve state-of-the-art performance in many HFR benchmarks.

This new neural network block called Prepended Domain Transformer (PDT) block is retrained for several source-target combinations using the proposed general framework.

The approach according to the invention is architecture agnostic, meaning they can be added to any pre-trained FR models. Further, the approach is modular and the new block can be trained with a minimal set of paired samples, making it much easier for practical deployment.

Most of the available heterogeneous face recognition datasets are small in size. This makes it harder to train HFR models from scratch. The invention is inter alia based on the insight that it is favourable to leverage pre-trained FR models which are already trained on large-scale face datasets. Leveraging a pre-trained FR model as one of the key component in the present framework is combined with the advantage that this approach of PDT and frozen pre-trained FR network does not depend on the selection of architecture for the face recognition network giving maximum flexibility in deployment. In other words, a new network module, called Prepended Domain Transformer (PDT), is prepended to the pre-trained face recognition module to transform the target domain image. The only learnable component is the new prepended module, which is very parameter efficient and obtains excellent performance with few paired samples. This method is very practical in deployment scenarios since one just needs to prepend a new module to convert a typical FR pipeline to an HFR pipeline. The approach is generic and can be retrained easily for any pair of heterogeneous modalities. Through extensive evaluations, the present application disclosure shows that this simple addition achieves state-of-the-art results in many challenging HFR datasets. The framework's design is intentionally kept simple to demonstrate the approach's effectiveness and to allow for future extensions. Moreover, the parameter and computational overhead added by the framework is negligible, making the proposed approach suitable for real-time deployment.

The prepended domain transformer block of the heterogeneous face recognition system can comprise modules for multi-scale processing by using three or more different parallel branches with different kernel sizes allowing for setting predetermined heterogeneous receptive fields in different target modalities, wherein the outputs of these branches are then combined.

In this respect the three or more different parallel branches can comprise rectifiers.

It is an advantage to pass the combined branches through a Convolutional Block Attention Module.

Furthermore, an additional channel dimension reducing 1x1 convolutional layer can be provided at the output of the prepended domain transformer block to reduce the channel dimension to three.

In case that a single channel input is presented to the prepended domain transformer block, a replicator can be provided at its entry to replicate the same single input channel to three channels.

The invention further comprises a pre-training method for the heterogeneous face recognition system according to the above mentioned claims, wherein in a forward pass a tuple of a source modality image and a target modality image is used, the source modality image passing directly through the shared pre-trained FR network to produce the embedding, while the target modality image first passes through the PDT module, and then the transformed-target modality image passes through the shared pre-trained FR network to generate the embedding, wherein a contrastive loss function is used to reduce the distance between these two embeddings when the identities are the same and to make them far when the identities are different.

Further embodiments of the invention are laid down in the dependent claims.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1     shows a RGB face image of a person and the same face captured with several different modalities;

Fig. 2     shows a diagram of the lay-out of a heterogeneous face recognition system according to an embodiment of the invention;

Fig. 3     shows a diagram of an embodiment of a prepended HFR module according to the invention;

Fig. 4     shows an example of the cross-modal face recognition of a thermal face image as outputted as a transformed thermal image by the prepended HFR module according to Fig. 3 and the end result after having passed through the pretrained FR system of Fig. 2; and

Fig. 5     shows a diagram of the lay-out of a prepended domain transformer (PDT) block.

DESCRIPTION OF PREFERRED EMBODIMENTS

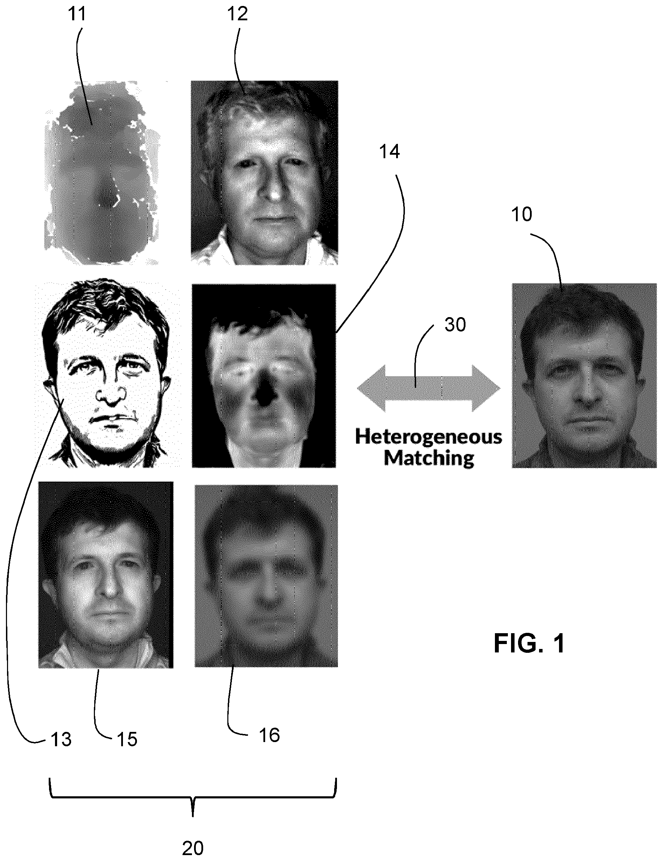

Fig. 1 shows the face 10 of the same person captured with several different modalities such as depth 11, short-wave infrared 12, sketch 13, thermal 14, near infrared 15 and blurred faces 16. The task in HFR is to perform cross-modal face recognition 20 given the RGB reference images, here 10, and the probe image from the new modalities, here 11 to 16.

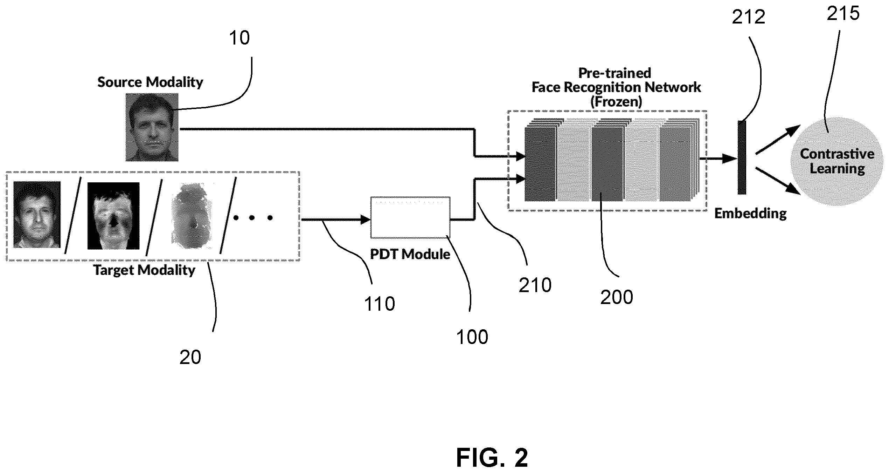

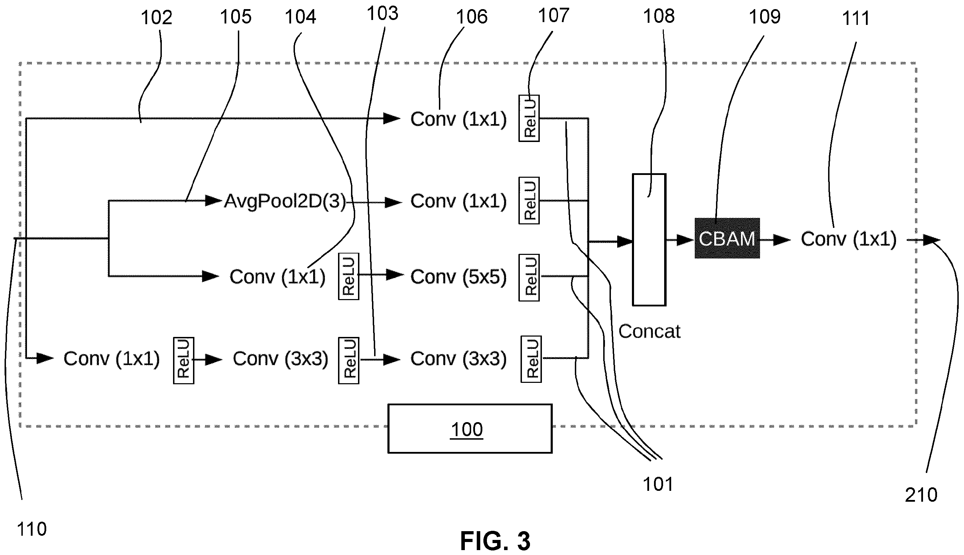

Fig. 2 shows a diagram of the lay-out of a heterogeneous face recognition system according to an embodiment of the invention and Fig. 3 shows a diagram of an embodiment of a prepended HFR module according to the invention.

The heterogeneous face recognition method executed within the heterogeneous face recognition system starts with a domain $\mathcal{D}$ with samples $X \in \mathbb{R}^d$ and a marginal distribution $P(X)$ (with dimensionality-d). The task of a Face recognition system $\mathcal{T}^{fr}$ can be defined by a label space $Y$ whose conditional probability is $P(Y|X,\Theta)$, where $X$ and $Y$ are random variables and $\Theta$ defines the model parameters. In the training phase of such a FR system, $P(Y|X,\Theta)$ is typically learnt in a supervised fashion given a dataset of n faces $X = \{x_1, x_2, ..., x_n\}$ together with their identities $Y = \{y_1, y_2, ..., y_n\}$.

The invention starts from the following heterogeneous face recognition (HFR) approach. There are two domains, source domain $\mathcal{D}^s = \{X^s, P(X^s)\}$ and target domain $\mathcal{D}^t = \{X^t, P(X^t)\}$ sharing the labels $Y$. The invention in this HFR approach $\mathcal{T}^{hfr}$ finds a $\Theta$, where $P(Y|X^s, \Theta) = P(Y|X^t, \Theta)$.

In the proposed approach, the samples from both domains, $X_s = \{x_1, x_2, ..., x_n\}$ and $X_t = \{x_1, x_2, ..., x_n\}$ from $\mathcal{D}^s$ and $\mathcal{D}^t$ with the shared set of labels $Y = \{y_1, y_2, ..., y_n\}$ are available.

The parameters of the FR model $\Theta$, i.e. $\Theta_{FR}$ for the (VIS) model is available from $\mathcal{D}^s$. In the case of the present invention, $\Theta_{FR}$ is essentially the parameters of a pre-trained FR model trained using visible spectrum images. It is started from the approach that a module with a learnable set of parameters $\theta_{PDT}$ transforms the target domain image to a new representation $(\hat{X}^t = \mathcal{F}_{PDT}(X^t))$ to reduce the domain gap while

keeping discriminative information. This new representation $(\hat{X}^t)$ can be used together with a pre-trained FR model to achieve the HFR task.

To accomplish this task, a small network module called "Prepended Domain Transformer" (PDT) is prepended to a pre-trained FR model. Essentially, this PDT module is applied as a transformation to the target modality images, which generates a transformed $(\mathcal{F}_{PDT}(X^t))$ image, which functions as a generated image in the synthesis-based methods. A neural network block is prepended in front of a pre-trained FR model to adapt domain-specific low-level features. This transformed image can then be passed to a pre-trained FR model to get the embeddings for the HFR task. The HFR approach can be written in the following way:

$$P(Y|X_s, \Theta_{FR}) = P(Y|X_t, [\theta_{PDT}, \Theta_{FR}]) \qquad (1)$$

The parameters of PDT block ($\theta_{PDT}$) can be learned in a supervised setting using back-propagation. In the forward pass for a tuple ($X^s, X^t$), the $X^s$ image directly passes through the shared pre-trained FR network to produce the embedding. The target image ($X^t$) first passes through the PDT module $(\hat{X}^t = \mathcal{F}_{PDT}(X^t))$, and then the transformed image passes through the shared pre-trained FR model to generate the embedding. In the training phase, a Contrastive loss function is used to reduce the distance between these embeddings when the identities are the same and to make them far when the identities are different. The contrastive loss function can be chosen as:

$$\mathcal{L}_{Contrastive}(\Theta, Y, X_s, X_t) = (1 - Y)\frac{1}{2}D_W^2$$

$$+ Y\frac{1}{2}max(0, m - D_W)^2$$

$$(2)$$

It is noted that further information relating to this loss function can be found in R. Hadsell, S. Chopra, and Y. LeCun, "Dimensionality reduction by learning an invariant mapping," in 2006 IEEE Computer Society Conference on Computer Vision and Pattern Recognition (CVPR'06), vol. 2. IEEE, 2006, pp. 1735-1742.

In this context $\Theta$ denotes the weights of the network, $X_s$, $X_t$ denote the heterogeneous pairs and $Y$ the label of the pair, i.e., whether they belong to the same identity or not, m is the margin, and $D_w$ is the distance function between the embeddings of the two samples. The label $Y = 0$, when the identities of subjects in $X_s$ and $X_t$ are the same, and $Y = 1$ otherwise. The distance function Dw can be computed as the Euclidean distance between the features extracted by the network.

The parameters of the shared FR model are kept frozen during the training and only the parameters of the PDT module are updated in the backward pass. At the end of the training, the model corresponding to minimum validation loss is selected which is used for the evaluations.

The following description explains a specific architecture and embodiment of said Prepended Domain Transformer (PDT) block 100.

The Prepended Domain Transformer block 100 according to this embodiment is designed to be parameter efficient and generic so that it can be used in a wide variety of heterogeneous scenarios. The input 110 to the PDT block 100 is a '3-channel' image and the output (210 since it is the input for the pretrained FR module 200) is also a '3-channel' image with the same size as the input. This makes it easier to visualize the output of the proposed PDT module 100 and also makes it easier to pass on the transformed images 114 to pre-trained FR models at inference time. Furthermore, this module can be "plugged in" to any pre-trained FR pipeline easily.

The architecture of the proposed PDT 100 module is shown in Fig. 3. This approach uses multi-scale processing by using different parallel branches 101 with different kernel sizes, here 1x1, 3x3 and 5x5. Parallel branches 101 are necessary since the receptive field required for various heterogeneous settings differs, and having multi-scale features at the input level aids in a generic design with minimal computational complexity. There are four parallel paths 101 from the input image, a $1\times1$ filter 102, a $3\times3$ branch 103 with two sequential filters, a $5 \times 5$ branch 104, and an average pooling branch 105.

In each of these branches, $1 \times 1$ convolutions 106 are used to reduce the number of output channels. A ReLU activation 107 is used after each of the convolution operations. Maxpooling layers were not required as the needed output is the same size as the input. The CBAM or Convolutional Block Attention Module 109 was added which achieves this in a simple and parameter efficient manner. The CBAM block 109 acts on a feature map along the channel as well as the spatial dimension in a sequential manner. Such a CBAM 109 can be found in S. Woo, J. Park, J.-Y. Lee, and I. S. Kweon, "Cbam: Convolutional block attention module," in Proceedings of the European conference on computer vision (ECCV), 2018, pp. 3-19.

The attention maps obtained are multiplied by the input feature map. In the PDT architecture, the feature map after the concatenation stage consists of features obtained with filters with different receptive fields. The addition of the CBAM module 109 helps in focusing on meaningful features along the channel and spatial dimensions. This makes the proposed architecture robust to a wide variety of HFR scenarios. After the CBAM block 109, the channel dimension of the output feature map is still high and a $1 \times 1$ convolutional layer 111 is added to reduce the channel dimension to three.

Overall the number of parameters to learn is merely 1.4k. The minimal design enables the network to focus on important features with a minimal parameter overhead. It is to be noted that, this module can be further optimized for specific heterogeneous scenarios. The PDT module 100 can be prepended to a pre-trained FR model 200 or can be used as a module that can transform images from the target channel to make them usable by the pre-trained FR model.

The above mentioned embodiment of an PDT 100 was used to be prepended to a specific pre-trained FR model 200, i.e. Iresnet100 model, this PDT 100 use can be extended to many publicly available pre-trained FR models 400 ..

In most cases, the pre-trained FR model accepts three-channel images with a resolution of 112 $\times$ 112. Faces are first aligned and cropped ensuring eye center coordinates fall on pre-fixed points. In the case of single channel inputs (such as NIR, thermal, etc.), the same channel is replicated to three channels without making any changes to the network architecture.

The implementation is based on the framework being trained in a standard Siamese network setting with contrastive loss. The margin parameter is set as 2.0 in all the experiments. Adam Optimizer with a learning rate of 0.001 was used and trained for 20 epochs with a batch size of 90. The framework was implemented in PyTorch using the Bob library (see A. Anjos, M. Gunther, T. de Freitas Pereira, P. Korshunov, A. Mohammadi, and S. Marcel, "Continuously reproducing toolchains in pattern recognition and machine learning experiments," in International Conference on Machine Learning (ICML), Aug. 2017.)

In the Siamese network, the entire pretrained FR model 200 is shared between source and target modalities with the exception of the new PDT module 100 added to the target channel branch. During training, only the parameters of the PDT module 100 are adapted while keeping the weights of the FR model frozen 200. The proposed approach can be extended to several different HFR scenarios such as VIS-Thermal, VISSWIR, VIS-Low resolution VIS and so on. Furthermore, components of the proposed framework according to the embodiment and the training routine are intentionally kept simple to demonstrate the efficacy of the proposed approach.

The HFR system was tested with a number of datasets:

Polathermal dataset: Pola Thermal dataset - Polarimetric and Thermal Database is an HFR dataset collected by the U.S. Army Research Laboratory (ARL). The dataset contains polarimetric LWIR (long-wave infrared) imagery together with color images collected synchronously with 60 subjects. The dataset contains thermal imagery collected for conventional thermal images as well as polarimetric images. In the experiments made here, the conventional thermal images were used. The same 5 fold partitions was followed in which 60 subjects were split into a training set with 25 identities and 35 identities for testing. To compare different methods, the average Rank-1 identification rate is reported from the evaluation set of the 5 folds.

The average Rank-1 recognition rate was 97.1% while prior art publications did not come beyond 78.72%.

Tufts face dataset: The Tufts Face Database provides face images captured with different modalities for the HFR task. Specifically, the thermal images provided in the dataset were used to evaluate VIS-Thermal HFR performance. Overall, there are a total of 113 identities comprising of 39 males and 74 females from different demographic regions. For each subject, images from different modalities are available. For comparison purposes, 50 identities are randomly selected from the data as the training set and the remaining subjects were used as the test set. The Rank-1 accuracies and Verification rates at 1% as well as 0.1% for comparison are reported.

The Rank-1 accuracy was 65.71 while the VR@FAR=1% and VR@FAR=0.1% were 69.39 and 45.45, respectively, and far better than other reported values.

ARL-VTF dataset: This is related to the DEVCOM Army Research Laboratory Visible-Thermal Face Dataset (ARL-VTF). The dataset contains heterogeneous data from 395 subjects with three visible spectra as well as one thermal (long-wave infrared- LWIR) camera, with over 500,000 images altogether. The dataset contains variability in terms of expressions, pose, and eyewear. The models are evaluated with the protocols originally provided with the dataset. The dataset also provides annotations for face landmarks. Several protocols evaluating the effects of the pose, expressions, and eyewear are also provided with the dataset. The test set for each setting is fixed to enable direct comparisons with state-of-the-art methods.

CASIA NIR-VIS 2.0 dataset: The CASIA NIR-VIS 2.0 Face Database provides images of subjects captured with both visible spectrum as well as near infrared lighting, with a total of 725 identities. Each subject in the dataset has 1-22 visible images and 5-50 near-infrared (NIR) images. The experimental protocols provided uses a 10-fold cross-validation protocol with 360 identities used for training. The gallery and probe set for evaluation consist of 358 identities. The train and test sets are made with disjoint identities. Experiments were performed in each fold and the mean and standard deviation of the performance metrics are reported.

The Rank-1 accuracy was 99.95+-0.04 while the VR@FAR=1% and VR@FAR=0.1% were 99.94+-0.03 and 99.77+-0.09, respectively, and in all values far better than other reported values.

SCFace dataset: The SCFace dataset contains high quality mugshot for enrolment for FR. The probe samples correspond to surveillance scenarios coming from different cameras and are of low quality. Depending on the distance and quality of probe samples, four different protocols are present. They are close, medium, combined, and far. The "far" protocol is the most challenging one. The dataset contains 4,160 static images (in visible and infrared spectrum) from 130 subjects.

The performance of the proposed approach in the SCFace dataset is considered with the baseline as a pretrained iresnet100model, and the comparison is made with the proposed approach.

While the Rank-1 accuracy was 100.0 and VR@FAR=0.01% was 100.0 for the close protocol for the baseline and the PDT approach, the differences grow from the Medium to the Far protocol to 84.19 and 46.51, respectively, and in both values far better than the baseline measurement (74.42 and 25.12, respectively).

As mentioned above. to evaluate the models, several different metrics corresponding to previous literature are followed. A subset of metrics from the following performance metrics were used, Area Under the Curve (AUC), Equal Error Rate (EER), Rank-1 identification rate, Verification Rate with different false acceptance rates (0.01%, 0.1%, 1%, and 5%).

One important advantage of the present approach is the possibility to train the PDT module 100 with a limited number of subjects. In this regard, a set of experiments was performed to show the effect of the amount of training data available to train on the model performance. This set of experiments was conducted with the ARL-VTF data due to the larger number of subjects it has. The test samples are kept the same for this set of experiments and the change is only in the number (or percentage) of training and validation samples. It was started with using 100% of the training samples and subsequently reduce the number of samples in intervals of 10% and eventually to 1%. For context, the number of subjects in the training set for these scenarios was noted. For 1% of the training data, it amounts to only two subjects in the training set. The results of this set of experiments are tabulated in the following Table. The approach according to the invention achieves a Rank-1 accuracy of 94.67% with just 2% percentage of the training data, for context, just with data from 4 subjects. This could be explained because of the parameter efficiency of this approach. The learnable component of the proposed contains approximately just 1.4K parameters, and hence requires a very minimal amount of data to achieve good performance.

| % of training data | Subjects | AUC | EER | Rank-1 | VR@ FAR=0.1% |
|---|---|---|---|---|---|
| 1% | 2 | 83.25 | 25.33 | 20.67 | 5.33 |
| 2% | 4 | 99.15 | 5.20 | 94.67 | 85.33 |
| 3% | 7 | 98.46 | 3.33 | 93.33 | 88 |
| 4% | 9 | 98.91 | 3.33 | 93.33 | 85.33 |
| 5% | 11 | 98.55 | 3.33 | 96.67 | 89.33 |
| 10% | 23 | 99.39 | 3.33 | 96.67 | 92 |
| 20% | 47 | 99.73 | 3.33 | 97.33 | 96.67 |
| 30% | 70 | 99.77 | 3.33 | 96 | 92.67 |
| 40% | 94 | 99.77 | 2.68 | 97.33 | 95.33 |
| 50% | 118 | 99.95 | 1.36 | 99.33 | 96.67 |
| 60% | 141 | 99.9 | 2.67 | 96.67 | 96.67 |
| 70% | 165 | 99.68 | 3.33 | 96.67 | 96 |
| 80% | 188 | 99.67 | 3.33 | 96.67 | 96 |
| 90% | 212 | 99.8 | 2.79 | 96.67 | 96 |
| 100% | 235 | 99.96 | 1.18 | 99.33 | 96.67 |

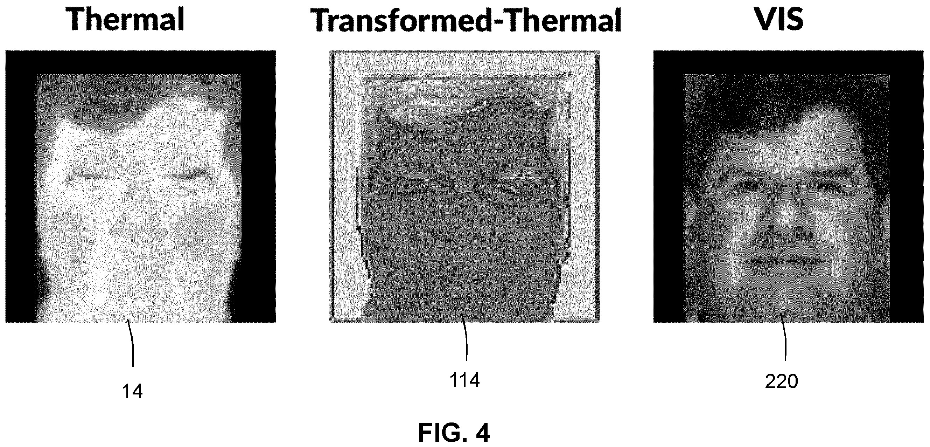

Fig. 4 shows an example of the cross-modal face recognition of a thermal face image 14 as outputted as a transformed thermal image 114 by the prepended HFR module 100 according to Fig. 3, wherein the embedding 212 from it produces a high match with the visual image 220 as the end result after having passed through the pretrained FR system of Fig. 2.

Said Fig. 4 shows a visualization of thermal to vis HFR scenario in Polathermal dataset, the Transformed-Thermal image 114 is the intermediate output from the PDT module 100, even though this image 114 doesn't look visually similar to the VIS image 220, the embedding 212 obtained from the transformed image 214 produces a high match score with the embedding 210 extracted from the VIS image 220, when the visual RGB image 10 is used as direct input 211 for the frozen pre-trained network 200.

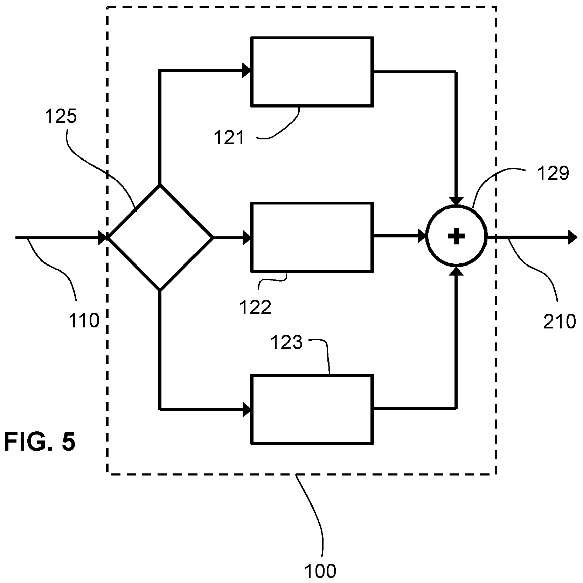

Fig. 5 shows a diagram of the lay-out of a prepended domain transformer (PDT) block 100. The PDT Module 100 receives the probe image from the new modalities, here 11 to 16. Therefore, the input image can be any modality, e.g. here especially short-wave infrared 12, sketch 13 and thermal 14 image. The prepended domain transformer (PDT) block 100 comprises here three prepended domain transformer units 121, 122 and 123, provided behind a allocator 125. The output of the prepended domain transformer units 121, 122 and 123 are combined in the combining unit creating the output being the input channel FR 210 for the pretrained face recognition network 200.

In other words, if the input images are all of the same modality, then there can be simply one prepended domain transformer unit, e.g. 121, and then the prepended domain transformer (PDT) block 100 is composed only of the single prepended domain transformer unit. The advantage of the system according to the invention is the possibility to use any pretrained face recognition network 200 without modification of said face recognition network 200 just with the prepended domain transformer (PDT) block 100 as a plug in with one of the prepended domain transformer units, e.g. built according to Fig. 3 for any input modality of images.

The prepended domain transformer block 100 is prepended to the pre-trained face recognition network 200 and is configured to transform the image from the target modality, here either a short-wave infrared image 12, a sketch image 13 or a thermal image 14 into a transformed-target modality image to be used as an input for the pre-trained face recognition network 200. The prepended domain transformer units 121, 122 and 123 are provided for handling short-wave infrared images 12, sketch images 13 and thermal images 14, respectively. The allocator 125 checks the incoming image for its modality and allocates it to the relevant prepended domain transformer unit 121, 122 or 123, i.e. sends a short-wave infrared image 12 to the prepended domain transformer unit 121, a sketch image 13 to the prepended domain transformer unit 122, as well as a thermal image 14 to the prepended domain transformer unit 123.

Each of the prepended domain transformer units 121, 122 and 123 is pretrained with images of the associated predetermined modality to transform the incoming image 20 (as seen in Fig. 2) from the target modality, here either a short-wave infrared image 12, a sketch image 13 or a thermal image 14 into a transformed-target modality image, to become the input for the pre-trained face recognition network 200. This is achieved by the sepecific (pre)transformation of the image from the target modality into a transformed-target modality image 114.

The different units the Prepended Domain Transformer (PDT) provides a completely unrelated approach to the pretrained Facial Recognition Model (FR). The PDT module is then prepended (or attached) to the FR model without making any changes to the pre-trained FR model. Choosing the transforming units 121, 122, 123 relating to the incoming modalities in the PDT offers more flexibility by allowing to change the architecture of the PDT block 100 without touching the FR architecture. PDT 100 can be viewed as a plug-in module while the DSU of prior art aims to modify the first layers of the FR 200 used.

Furthermore, PDT 100 relies on multiscale processing by using multiple branches for different receptive fields. The CBAM has the role to focus on important features and suppress unnecessary ones along two dimensions: channel and spatial axes. Thus making the proposed architecture robust to a wide variety of HFR scenarios.

## LIST OF REFERENCE SIGNS

| | | | | |
|---|---|---|---|---|
| 10 | RGB reference image / source modality | | 109 | Convolutional Block Attention Module (CBAM) |
| 11 | depth image | | 110 | input channel PDT module |
| 12 | short-wave infrared image | | 114 | transformed thermal image |
| 13 | sketch image | | 121 | prepended domain transformer unit, modality 1 |
| 14 | thermal image | | | |
| 15 | near infrared image | | 122 | prepended domain transformer units, modality 2 |
| 16 | blurred RGB image | | | |
| 20 | target modalities | | 123 | prepended domain transformer units, modality 3 |
| 30 | cross-modal face recognition | | | |
| 100 | PDT module | | 125 | allocator |
| 101 | branch | | 129 | combining unit |
| 102 | 1x1 filter | | 200 | pre-trained FR network |
| 103 | 3x3 branch | | 210 | input channel FR via PDT |
| 104 | 5x5 branch | | 211 | direct input channel FR |
| 105 | average pooling branch | | 212 | embedding |
| 106 | 1x1 convolution | | 215 | contrastive learning loss function |
| 107 | Rectifier Linear Unit (ReLU) | | | |
| 108 | combination module | | 220 | visual image |

## Claims

1. A heterogeneous face recognition method comprising:

   providing a pre-trained face recognition network (200),
   capturing an image (11, 12, 13, 14, 15, 16) comprising at least one face in a target modality (20);
   detecting a face in the image (11, 12, 13, 14, 15, 16);
   applying face recognition in the pre-trained face recognition network (200) on said image (11, 12, 13, 14, 15, 16),

   **characterized in that** a prepended domain transformer block (100) is prepended to the pre-trained face recognition network (200) and is configured to transform the image from the target modality into a transformed-target modality image (114) to be used as an input for the pre-trained face recognition network (200).

2. The heterogeneous face recognition method of claim 1, wherein the prepended domain transformer block (100) comprises modules for multi-scale processing by using three or more different parallel branches (101) with different kernel sizes (103, 104, 106) allowing for setting predetermined heterogeneous receptive fields in different target modalities, wherein the outputs of these branches are then combined (108).

3. The heterogeneous face recognition method of claim 2, wherein the three or more different parallel branches comprise rectifiers (107).

4. The heterogeneous face recognition method of claim 2 or 3, wherein the combined branches are passed through a Convolutional Block Attention Module (109).

5. The heterogeneous face recognition method of any one of claims 2 to 4, wherein an additional channel dimension reducing 1x1 convolutional layer is provided at the output of the prepended domain transformer block (100) to reduce the channel dimension to three.

6. The heterogeneous face recognition method of any one of claims 2 to 5, wherein in case that a single channel input is presented to the prepended domain transformer block (100) an replicator is provided to replicate the same single input channel to three channels.

7. The heterogeneous face recognition method of any one of claims 1 to 6, wherein the prepended domain transformer block (100) comprises a a prependend domain transformer unit (121, 122, 123) for transforming the image from the target modality into a transformed-target modality image (114) separately for each modality of probe images (11 to 16).

8. A heterogeneous face recognition system comprising a pre-trained face recognition network (200),wherein the pre-trained face recognition network (200) has an input channel (210) configured to input a captured image (11, 12, 13, 14, 15, 16) comprising at least one face in a target modality (20) into the pre-trained face recognition network (200); **characterized in that** a prepended domain transformer block (100) is prepended to the pre-trained face recognition network (200) configured to provide a prepended input channel for the captured image (11, 12, 13, 14, 15, 16) in the target modality, wherein the prepended domain transformer block (100) is configured to transform the captured image from the target modality into a transformed-target modality image (114) to be used as an input image for the pre-trained face recognition network (200).

9. The heterogeneous face recognition system of claim 8, wherein the prepended domain transformer block (100) comprises modules for multi-scale processing by using three or more different parallel branches (101) with different kernel sizes (103, 104, 106) allowing for setting predetermined heterogeneous receptive fields in different target modalities, wherein the outputs of these branches are then combined (108).

10. The heterogeneous face recognition system of claim 9, wherein the three or more different parallel branches comprise rectifiers (107) and / or wherein the combined branches are passed through a CBAM (109).

11. The heterogeneous face recognition system of any one of claims 9 or 10 , wherein an additional channel dimension reducing 1x1 convolutional layer is provided at the output of the prepended domain transformer block (100) to reduce the channel dimension to three.

12. The heterogeneous face recognition system of any one of claims 9 to 11, wherein in case that a single channel input is presented to the prepended domain transformer block (100) an replicator is provided to replicate the same single input channel to three channels.

13. The heterogeneous face recognition system of any one of claims 8 to12, wherein the prepended domain transformer block (100) comprises a a prependend domain transformer unit (121, 122, 123) for transforming the image from the target modality into a transformed-target modality image (114) separately for each modality of probe images (11 to 16).

14. A pre-training method for the heterogeneous face recognition system according to any one of claims 9 to 13, wherein in a forward pass a tuple of a source modality image (10) and a target modality image (20) is used, the source modality image (10) passing directly through the shared pre-trained FR network (200) to produce the embedding (212), while the target modality image (20) first passes through the PDT module (100), and then the transformed-target modality image (114) passes through the shared pre-trained FR network (200) to generate the embedding (212), wherein a contrastive loss function (215) is used to reduce the distance between these two embeddings (212, 212) when the identities are the same and to make them far when the identities are different.

15. The pre-training method according to claim 14, wherein the contrastive loss function is

$$\mathcal{L}_{Contrastive}(\Theta, Y, X_s, X_t) = (1 - Y)\frac{1}{2}D_W^2$$

$$+ Y\frac{1}{2}max(0, m - D_W)^2 .$$

where $\Theta$ denotes the weights of the network, $X_s$, $X_t$ denote the heterogeneous pairs and $Y$ the label of the pair, i.e., whether they belong to the same identity or not, m is the margin, and Dw is the distance function between the embeddings (212, 212) of the two samples, wherein the label $Y = 0$, when the identities of subjects in $X_s$ and $X_t$ are the same, and Y = 1 otherwise.

FIG. 1

FIG. 2

**FIG. 3**

Thermal — 14
Transformed-Thermal — 114
VIS — 220

FIG. 4

FIG. 5

Europäisches
Patentamt

European
Patent Office

Office européen
des brevets

EUROPEAN SEARCH REPORT

**Application Number**

EP 23 16 3420

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE FREITAS PEREIRA TIAGO ET AL: "Heterogeneous Face Recognition Using Domain Specific Units", IEEE TRANSACTIONS ON INFORMATION FORENSICS AND SECURITY, IEEE, USA, vol. 14, no. 7, 1 July 2019 (2019-07-01), pages 1803-1816, XP011715430, ISSN: 1556-6013, DOI: 10.1109/TIFS.2018.2885284 [retrieved on 2019-03-20] * section I-V; page 1803 - page 1814 * & De Tiago ET AL: "Supplementary Material: Heterogeneous Face Recognition Using Domain Specific Units APPENDIX A RESULTS AND DISCUSSION USING INCEPTION RESNET V1", , 6 December 2018 (2018-12-06), pages 1-6, XP055959573, Retrieved from the Internet: URL:https://ieeexplore.ieee.org/ielx7/1020 6/8672149/8565895/suplementary.pdf?arnumbe r=8565895 [retrieved on 2022-09-09] * Appendix B; page 5 - page 6; figures 9-10 * | 1-15 | INV. G06V10/82 G06V40/16 |
| X | DAVID ANGHELONE ET AL: "Beyond the Visible: A Survey on Cross-spectral Face Recognition", ARXIV.ORG, CORNELL UNIVERSITY LIBRARY, 201 OLIN LIBRARY CORNELL UNIVERSITY ITHACA, NY 14853, 12 January 2022 (2022-01-12), XP091138229, | 1,8 | TECHNICAL FIELDS SEARCHED (IPC) G06V |
| A | * sections 1-7; page 1 - page 18 * | 2-7,9-15 | |

-/--

The present search report has been drawn up for all claims

| Place of search | Date of completion of the search | Examiner |
|---|---|---|
| The Hague | 12 June 2023 | Chehade, Thomas |

EPO FORM 1503 03.82 (P04C01)

Europäisches
Patentamt

European
Patent Office

Office européen
des brevets

# EUROPEAN SEARCH REPORT

Application Number

EP 23 16 3420

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IRANMANESH SEYED MEHDI ET AL: "Coupled generative adversarial network for heterogeneous face recognition", IMAGE AND VISION COMPUTING, ELSEVIER, GUILDFORD, GB, vol. 94, 10 December 2019 (2019-12-10), XP086062818, ISSN: 0262-8856, DOI: 10.1016/J.IMAVIS.2019.103861 [retrieved on 2019-12-10] | 1,8 | |
| A | * sections 1-3; page 1 - page 6 * | 2-7,9-15 | |
| X | HU WEIPENG ET AL: "Disentangled Spectrum Variations Networks for NIR-VIS Face Recognition", IEEE TRANSACTIONS ON MULTIMEDIA, IEEE, USA, vol. 22, no. 5, 30 August 2019 (2019-08-30), pages 1234-1248, XP011784969, ISSN: 1520-9210, DOI: 10.1109/TMM.2019.2938685 [retrieved on 2020-04-22] | 1,8 | |
| | | | TECHNICAL FIELDS SEARCHED (IPC) |
| A | * sections I-II; page 1234 - page 1237 * | 2-7,9-15 | |
| | -/-- | | |

The present search report has been drawn up for all claims

| Place of search | Date of completion of the search | Examiner |
|---|---|---|
| The Hague | 12 June 2023 | Chehade, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 16 3420

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HU WEIPENG ET AL: "Adversarial Disentanglement Spectrum Variations and Cross-Modality Attention Networks for NIR-VIS Face Recognition", IEEE TRANSACTIONS ON MULTIMEDIA, IEEE, USA, vol. 23, 16 March 2020 (2020-03-16), pages 145-160, XP011826635, ISSN: 1520-9210, DOI: 10.1109/TMM.2020.2980201 [retrieved on 2020-12-16] | 1,8 | |
| A | * section I-III; page 145 - page 151 * ----- | 2-7,9-15 | |
| A | HONG SUNGEUN ET AL: "Unsupervised Face Domain Transfer for Low-Resolution Face Recognition", IEEE SIGNAL PROCESSING LETTERS, IEEE, USA, vol. 27, 28 December 2019 (2019-12-28), pages 156-160, XP011769819, ISSN: 1070-9908, DOI: 10.1109/LSP.2019.2963001 [retrieved on 2020-01-30] * section III; page 157 - page 158 * ----- | 1-15 | |
| X,P | ANJITH GEORGE ET AL: "Prepended Domain Transformer: Heterogeneous Face Recognition without Bells and Whistles", ARXIV.ORG, CORNELL UNIVERSITY LIBRARY, 201 OLIN LIBRARY CORNELL UNIVERSITY ITHACA, NY 14853, 12 October 2022 (2022-10-12), XP091342421, * the whole document * ----- | 1-15 | TECHNICAL FIELDS SEARCHED (IPC) |

The present search report has been drawn up for all claims

| Place of search | Date of completion of the search | Examiner |
|---|---|---|
| The Hague | 12 June 2023 | Chehade, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 210

### Non-patent literature cited in the description

- Heterogenous Face Recognition Using Domain Specific Units. **DE FREITAS PEREIRA TIAGO et al.** IEEE Transactions on Information Forensics and Security. IEEE, vol. 14, 1803-1816
- **DAVID ANGHELONE.** Beyond the Visible: A Survey on Cross-spectral Face Recognition. Cornell Unitversity Library, 12 January 2022
- Coupled generative adversial network for heterogenous face recognition. **IRANMANESH SEYED MEHID.** Image and Vision Computing. Elsevier, 10 December 2019, vol. 94
- Disentangled Spectrum Variations Networks for NIR-VIS Face Recognition. **HU WEIPENG et al.** IEEE Transactions on Multimedia. IEEE, 30 August 2019, vol. 22, 1234-1248
- *Adversarial Disentangled Spectrum Variations and Cross-Modality Attention Networks for NIR-VIS Face Recognition,* 16 March 2020, vol. 23, ISSN 1520-210, 145-160
- Dimensionality reduction by learning an invariant mapping. **R. HADSELL ; S. CHOPRA ; Y. LECUN.** 2006 IEEE Computer Society Conference on Computer Vision and Pattern Recognition (CVPR'06). IEEE, 2006, vol. 2, 1735-1742
- **S. WOO ; J. PARK ; J.-Y. LEE ; I. S. KWEON.** Cbam: Convolutional block attention module. *Proceedings of the European conference on computer vision (ECCV),* 2018, 3-19
- **A. ANJOS ; M. GUNTHER ; T. DE FREITAS PEREIRA ; P. KORSHUNOV ; A. MOHAMMADI ; S. MARCEL.** Continuously reproducing toolchains in pattern recognition and machine learning experiments. *International Conference on Machine Learning (ICML),* August 2017